# EUROPÄISCHE PATENTANMELDUNG

(11) **EP 1 739 782 A1**
(43) Veröffentlichungstag der Anmeldung: **03.01.2007**
(21) Anmeldenummer: 05013969.0
(22) Anmeldetag: 28.06.2005
(51) Int. Cl.: H01M 8/24, H01M 2/20, H01M 2/32

(54) **Verfahren zum Betreiben einer elektrochemischen Batterie und elektrochemische Einrichtung mit einer derartigen Batterie**

(71) Anmelder: SIEMENS AKTIENGESELLSCHAFT, 80333 München (DE)
(72) Erfinder: Coerlin, Detlev, 91056 Erlangen (DE); Stühler, Walter, 96114 Hirschaid (DE); Voitlein, Ottmar, 91475 Lonnerstadt (DE)

(57) **Zusammenfassung**

Beim Betrieb einer elektrochemischen Batterie (1), insbesondere einer Brennstoffzellen-Batterie oder einer Elektrolysezellen-Batterie, mit zumindest einem mit einem ersten Gas (PG) befüllten Druckraum (6) zur Erzeugung eines Anpressdruckes zwischen Bauteilen der elektrochemischen Batterie (1), können Korrosionserscheinungen in und an dem Druckraum (6) dadurch verhindert werden, dass zumindest ein Anteil des in dem Druckraum (6) befindlichen ersten Gases (PG) aus dem Druckraum (6) abgeführt und durch trockenes erstes Gas (PG) ersetzt wird.

## Beschreibung

Die Erfindung betrifft ein Verfahren zum Betreiben einer elektrochemischen Batterie, insbesondere einer Brennstoffzellen-Batterie oder einer Elektrolysezellen-Batterie, mit zumindest einem mit einem Gas befüllten Druckraum zur Erzeugung eines Anpressdruckes zwischen Bauteilen der elektrochemischen Batterie, sowie eine elektrochemische Einrichtung mit einer derartigen Batterie; eine derartige elektrochemische Batterie ist z.B. aus der EP 0 591 800 B1 bekannt.

Druckräume dienen in elektrochemischen Batterien zum einen zur Erzeugung eines Anpressdruckes zwischen benachbarten Bauteilen um einen guten Stromfluss zwischen diesen Bauteilen zu gewährleisten. Zum anderen können Druckräume zum Ausgleich von Toleranzen in den Abmessungen benachbarter Bauteile dienen. Üblicherweise sind diese Druckräume zur Druckerzeugung unabhängig von der Medienversorgung der elektrochemisch aktiven Elemente mit einem Gas wie z.B. Stickstoff befüllbar.

Die EP 0 591 800 B1 offenbart eine Brennstoffzellen-Batterie, die zwischen jeweils zwei parallel zueinander angeordneten Elektrolyt-Elektroden-Einheiten, die aus jeweils einer Anode, einer Polymer-Elektrolyt-Membran (PEM) und einer Kathode bestehen, zwei parallel zueinander angeordnete und miteinander verbundene Platten aufweist, die zwischen sich einen Hohlraum bilden. Der Hohlraum kann als druckbeaufschlagbarer Druckraum zum Aufbau eines Druckkissens verwendet werden, das einen Druck auf die benachbarten Bauteile ausübt.

Eine aus der DE 27 29 640 C3 bekannte Batterie aus einer Mehrzahl elektrochemischer Zellen, insbesondere Brennstoffelementen, weist parallel zueinander angeordnete Elektrolyt-Elektrodeneinheiten auf, zwischen denen jeweils metallische Kontaktkörper zur Stromabnahme angeordnet sind. Diese Kontaktkörper weisen einen Hohlraum zum Zuführen eines unter Druck stehenden Mediums auf.

Aus der WO 2004/109838 A1 ist es zudem bekannt, einen Druckraum zwischen zwei Kühlkarten anzuordnen.

Um einen Stromfluss durch einen derartigen Druckraum zu ermöglichen, kann im Druckraum ein die Begrenzungen des Druckraumes elektrisch kontaktierendes Stromübertragungselement vorgesehen werden. Da sich die Abstände der Begrenzungen des Druckraumes bei Druckbeaufschlagung verändern können, ist das Stromübertragungselement üblicherweise als Federelement ausgebildet und ermöglicht somit einen Abstandsausgleich.

In manchen Fällen werden beim Betrieb einer derartigen Batterie an den mit dem Druckraum in Kontakt stehende Bauteilen, z.B. an den angrenzende Kühlkarten oder an in dem Raum angeordneten Federelementen, Korrosionserscheinungen festgestellt. An den Bauteilen bilden sich Oxidschichten, die zu hohen Spannungsabfällen mit Wärmeentwicklung führen, was zu Beschädigungen der betroffenen Bauteile führen kann.

Es ist deshalb Aufgabe vorliegender Erfindung, ein Verfahren zum Betrieb einer eingangs beschriebenen elektrochemischen Batterie und eine elektrochemische Einrichtung mit einer derartigen Batterie anzugeben, mit dem bzw. der Korrosionserscheinungen in und an den Druckräumen sicher vermieden werden können.

Die auf das Verfahren gerichtete Aufgabe wird erfindungsgemäß gelöst durch ein Verfahren gemäß Patentanspruch 1. Die auf die Einrichtung gerichtete Aufgabe wird erfindungsgemäß gelöst durch eine Einrichtung gemäß Patentanspruch 10. Vorteilhafte Ausgestaltungen sind jeweils Gegenstand der Unteransprüche.

Die Erfindung geht hierbei von der Erkenntnis aus, dass die Korrosion durch in dem Druckraum eingeschlossene Feuchte erzeugt wird. Die Feuchtigkeit kann beispielsweise bei der Erstmontage der elektrochemischen Batterie aufgrund nass eingebauter Elektrolyt-Elektrodeneinheiten als auch nach einer Reparatur, z.B. durch in Kühlelementen der Batterie enthaltenes Wasser, in die Druckräume gelangen. Außerdem kann bei einer in einem druckdichten Gehäuse eingebauten Batterie Feuchtigkeit aus der üblicherweise wasserdampfgesättigten Gehäuseatmosphäre in die trockenen Druckräume hineindiffundieren.

Durch die erfindungsgemäße Abführung zumindest eines Anteils des in dem Druckraum befindlichen ersten Gases aus dem Druckraum und dessen Ersatz durch trockenes erstes Gas können hohe Feuchtigkeitskonzentrationen in dem Druckraum und somit Korosionserscheinungen vermieden werden.

Unter einer elektrochemischen Batterie wird hierbei eine Brennstoffzellen-Batterie ebenso verstanden wie eine Batterie aus Elektrolysezellen.

Das Ersetzen des abgeführten Gasanteils durch trockenes Gas kann hierbei kontinuierlich durch andauernde Zufuhr eines einstellbaren Volumenstromes von trockenem Gas vorgenommen werden. Das Ersetzen des Gasanteils durch trockenes Gas kann aber auch nach Ablauf eines vorgebbaren Wartungsintervalls durch Austausch von im wesentlichen des gesamten den Druckraum ausfüllenden ersten Gases vorgenommen werden.

Gemäß einer besonders vorteilhaften Ausgestaltung der Erfindung wird das in dem Druckraum befindliche erste Gas über einen Umwälzkreis umgewälzt und dabei in einer Trockeneinrichtung getrocknet. Hierdurch können kontinuierlich bei laufendem Betrieb der Batterie in dem ersten Gas enthaltene Wasserbestandteile sicher entfernt werden.

Als Trockeneinrichtung ist bevorzugt ein Kondensator vorgesehen.

Wenn die elektrochemische Batterie in einem Einbauraum angeordnet ist, der mit einem zweiten Gas, beispielsweise einem Schutzgas, befüllt ist, wird das zweite Gas bevorzugt ebenfalls über einen Umwälzkreis umgewälzt und dabei mit einer Trockeneinrichtung getrocknet, wobei die Trockeneinrichtung des zweiten Gases und die Trockeneinrichtung des ersten Gases zu einer einzigen Trockeneinrichtung zusammengefasst sind. Die Trockeneinrichtung kann somit für beide Umwälzkreise gemeinsam genutzt werden, wodurch eine zusätzliche Trockeneinrichtung entfallen kann.

Alternativ kann, wenn die elektrochemische Batterie in einem Einbauraum angeordnet ist, der mit einem zweiten Gas befüllt ist, das zweite Gas ebenfalls über den Umwälzkreis für das erste Gas umgewälzt und dabei mit dessen Trockeneinrichtung getrocknet werden. Der Umwälzkreislauf für das erste Gas kann somit in den Umwälzkreislauf für das zweite Gas eingebunden werden, bzw. der Umwälzkreislauf für das erste Gas in einen bereits vorhandenen Umwälzkreislauf für das zweite Gas eingebunden werden, wodurch eine zusätzliche Versorgung für das erste bzw. zweite Gas entfällt.

Bei einer erfindungsgemäßen elektrochemischen Einrichtung mit einer elektrochemische Batterie, insbesondere eine Brennstoffzellen-Batterie oder eine Elektrolysezellen-Batterie, mit einem mit einem ersten Gas befüllbaren Druckraum zur Erzeugung eines Anpressdruckes zwischen Bauteilen der elektrochemischen Batterie, ist erfindungsgemäß der Druckraum mit einer Abströmleitung zur Abfuhr von zumindest einem Teil des ersten Gases aus dem Druckraum und mit einer Zuströmleitung zur Zufuhr von trockenem ersten Gas zu dem Druckraum verbunden.

Die für das erfindungsgemäße Verfahren genannten Vorteile gelten entsprechend für die erfindungsgemäße elektrochemische Einrichtung.

Die Erfindung sowie weitere vorteilhafte Ausgestaltungen der Erfindung gemäß Merkmalen der Unteransprüche werden im Folgenden anhand von Ausführungsbeispielen in den Figuren näher erläutert. Es zeigen:
- FIG 1: ein aus dem Stand der Technik bekanntes Beispiel für eine Brennstoffzellenbatterie mit einem Druckraum,
- FIG 2: ein erstes Ausführungsbeispiel einer erfindungsgemäßen elektrochemischen Einrichtung und
- FIG 3: ein zweites Ausführungsbeispiel einer erfindungsgemäßen elektrochemischen Einrichtung.

Einander entsprechende Teile sind in den Figuren mit den gleichen Bezugszeichen versehen.

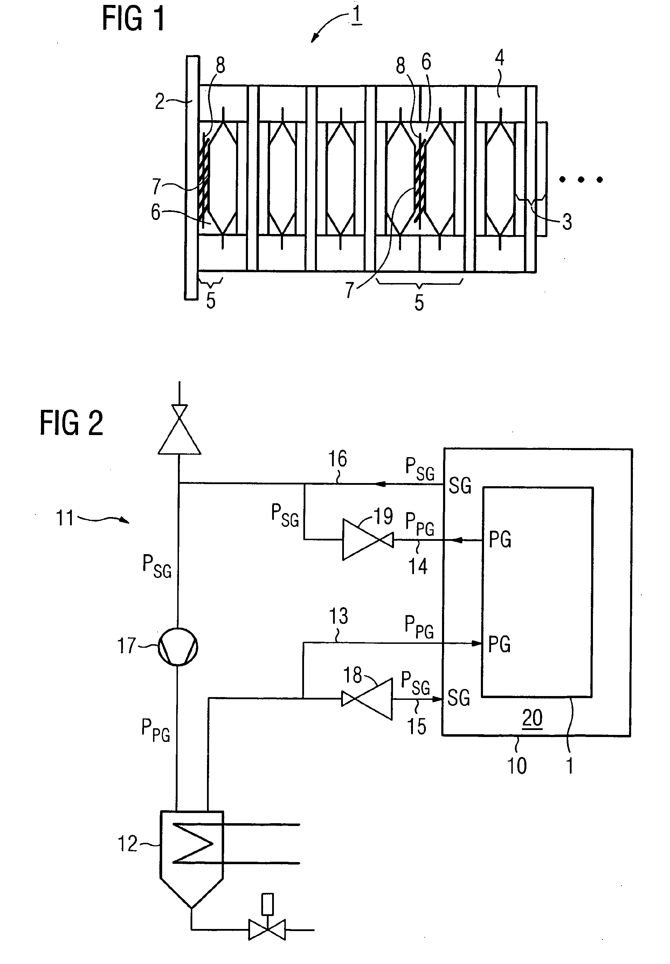

Die FIG 1 zeigt ausschnittsweise in vereinfachter Querschnittsdarstellung eine aus der WO 2004/109838 A1 bekannte elektrochemische Batterie 1 in Form einer Brennstoffzellen-batterie bzw. eines Brennstoffzellenblocks. Die Batterie 1 umfasst eine erste Polplatte 2, eine von dieser parallel beabstandete, nicht dargestellte zweite Polplatte, sowie eine Anzahl zwischen diesen angeordneter Elektrolyt-Elektrodeneinheiten 3. Zwischen jeweils zwei der Elektrolyt-Elektrodeneinheiten 3, welche auch als Membran-Elektrodeneinheiten (ME) bezeichnet werden und Kohlepapiere, Katalysatorschichten und Membranen umfassen, sowie zwischen einer außen liegenden Elektrolyt-Elektrodeneinheit 3 und der benachbarten Polplatte 2 ist jeweils eine Kühlkarte 4 angeordnet. Die auch als Bipolarplatten verwendeten Kühlkarten 4 sind aus dünnen, von ihrer Materialstärke und geometrischen Struktur her leicht verformbaren Blechen gebildet und passen sich Höhenunterschieden der benachbarten Bauteile, d.h. der Membran-Elektrodeneinheiten 3 einschließlich nicht näher dargestellter Gasräume bzw. der Polplatten 2, leicht an.

In dem in FIG 1 dargestellten Ausschnitt aus der Batterie 1 ist eine der Elektrolyt-Elektrodeneinheiten 3 aus dem Stapel entfernt, so dass an dieser Stelle ein Hohlraum bzw. Druckraum 6 gebildet ist. Durch Druckbeaufschlagung dieses Druckraumes 6 mit einem ersten Gas, hier einem Pressgas, z.B. Stickstoff, ist ein Druckkissen 5 gebildet, welches neben dem Druckraum 6 zwei an diese grenzende Kühlkarten 4 umfasst. Der Druck in dem Druckraum 6 ist größer als die Drücke in den benachbarten Gas- und Kühlwasserräumen, so dass der Druckraum 6 auseinander- und die angrenzenden Räume zusammengedrückt werden. Ein Druckkissen 5 mit lediglich einer Kühlkarte 4, ansonsten jedoch analogem Aufbau, grenzt direkt an die Polplatte 2. Die Grenzfläche zwischen dem Druckraum 6 und der Kühlkarte 4 ist gebildet durch eine Kontaktplatte 7, welche eine zumindest geringfügige Flexibilität aufweist. Zur Übertragung des Stroms durch den geometrisch variablen Druckraum 6 ist ein Federelement 8 vorgesehen.

Der Druck des Mediums im Druckraum 6 des Druckkissens 5 erzeugt eine Flächenpressung an den benachbarten Bauteilen, insbesondere an den Elektrolyt-Elektrodeneinheiten 3, die über der Fläche der Bauteile keine Unterschiede aufweist, auch wenn die Bauteile, beispielsweise aufgrund von Fertigungstoleranzen, örtlich unterschiedliche Dicken haben.

FIG 2 zeigt den prinzipiellen Aufbau eines ersten Ausführungsbeispieles einer erfindungsgemäßen elektrochemischen Einrichtung. Eine elektrochemische Batterie 1, z.B. der in FIG 1 gezeigten Art, ist in einem Schutzgehäuse 10 angeordnet. Der von dem Schutzgehäuse 10 umschlossene Innenraum 20 ist mit einem zweiten Gas, hier einem Schutzgas SG, z.B. Stickstoff, befüllt.

Über eine Zuströmleitung 13 kann Pressgas PG den in FIG 2 nicht näher dargestellten Druckräumen der elektrochemischen Batterie 1 zugeführt und über eine Abströmleitung 14 das Pressgas PG aus den Druckräumen abgeführt werden. Die Druckräume der Batterie 1 sind hierbei über die Zuströmleitung 13 und die Abströmleitung 14 in einen geschlossenen Umwälzkreis 11 mit einer Trockeneinrichtung 12 für das Pressgas PG geschaltet. Das in den Druckräumen der Batterie 1 befindliche Pressgas PG wird somit kontinuierlich aus den Druckräumen abgeführt und durch trockenes Pressgas PG ersetzt. Hierdurch können hohe Feuchtigkeitskonzentrationen und somit Korrosionserscheinungen in den Druckräumen vermieden werden.

Das Schutzgas SG wird ebenfalls über den Pressgas-Umwälzkreis 11 umgewälzt und dabei mit der Trockeneinrichtung 12 getrocknet. Hierdurch können Feuchtigkeitsansammlungen im Inneren des Schutzgehäuses, die zu Korrosionserscheinungen, Verschlechterungen der Isolierwirkung von Isolationsstoffen oder sogar zu Kurzschlüssen führen können, sicher vermieden. Die Zufuhr des Schutzgases SG zu dem Innenraum 20 erfolgt hierbei über eine Zuströmleitung 15, die Abfuhr des Schutzgases SG aus dem Innenraum über eine Abströmleitung 16. Die Zuströmleitung 15 für das Schutzgas SG ist hierbei parallel zu der Zustromleitung 13 für das Pressgas PG und die Abströmleitung 16 für das Schutzgas SG parallel zu der Abströmleitung 14 des Pressgases PG in den Umwälzkreis 11 geschaltet. Der Umwälzkreis 11 ist auf den hohen Druck P_{PG} des Pressgases PG ausgelegt. Das in dem Pressgas-Umwälzkreis 11 umgewälzte Gas wird mit Hilfe eines Verdichters 17 vor der Zufuhr zu dem Innenraum 20 und den Druckräumen der Batterie 1 verdichtet. Das Pressgas PG wird hierbei auf dem für die Druckräume der Batterie 1 benötigten Druck P_{PG} verdichtet, wobei das den Innenraum 20 zuzuführende Schutzgas SG vor der Zufuhr zu dem Innenraum 20 mit Hilfe des Druckminderers 18 auf den für den Innenraum 20 benötigten Druck P_{SG} entspannt wird.

Das aus den Druckräumen der Batterie 1 abgeführte Pressgas PG wird wiederum vor der Zusammenführung mit dem aus dem Innenraum 20 abgeführten Schutzgas SG mittels eines Druckminderers 19 auf den Druck P_{SG} des Schutzgases SG, entspannt.

Durch die Einbindung des Umwälzkreises für das Schutzgas SG in den Umwälzkreis 11 für das Pressgas PG kann auf eine separate Gasversorgung für das Schutzgas SG verzichtet werden. Zudem wird die Trocknung der Schutzgasatmosphäre verbessert, da das Schutzgas SG vor dem Eintritt in den Innenraum 20 entspannt wird und dadurch mehr Wasser aufnehmen kann.

Bevorzugt wird Stickstoff als Press- und Schutzgas verwendet. Der Stickstoff wird den Druckräumen der Batterie 1 mit einem Druck P_{PG} = 5 bis 5,1 bar zugeführt. Das Schutzgas wird dem Innenraum 20 mit einem Druck P_{SG} von etwa 3,1 bar zugeführt. Ist der Stickstoff bei einer Temperatur von 60°C und einem Druck von 5 bar wasserdampfgesättigt, so besitzt er bei 3 bar nur noch 56 % relative Feuchte. Der dem Innenraum 20 zugeführte Stickstoff kann somit deutlich mehr Wasser aufnehmen, womit die Trocknung der Schutzgasatmosphäre in dem Innenraum 20 verbessert werden kann.

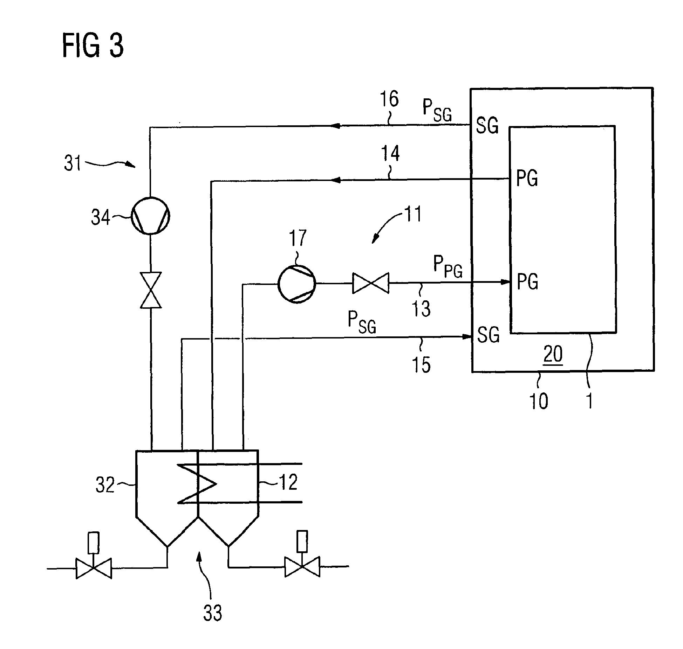

In Unterschied hierzu sind bei dem in FIG 3 dargestellten Ausführungsbeispiel einer erfindungsgemäßen elektrochemischen Einrichtung jeweils ein separater geschlossener Umwälzkreis für das erste und das zweite Gas, hier das Pressgas PG und das Schutzgas SG, vorgesehen. Der Umwälzkreis 11 dient zur Umwälzung und zur Trocknung des in den nicht näher dargestellten Druckräumen der Brennstoffzellenbatterie 1 enthaltenen Pressgases PG. Das in dem Umwälzkreis 11 mit Hilfe der Trockeneinrichtung 12 getrocknete und mit Hilfe des Verdichters 17 auf einen Betriebsdruck P_{PG} von 5 bar verdichtete Pressgas PG wird über eine Zuströmleitung 13 den Druckräumen der Batterie 1 zu und über eine Abströmleitung 14 aus den Druckräumen der Batterie 1 abgeführt.

Der von dem Schutzgehäuse 10 umschlossene Innenraum 20 ist in einen geschlossenen Umwälzkreis 31 mit einer Trockeneinrichtung 32 für das Schutzgas SG geschaltet. Das Schutzgas SG wird hierbei mit Hilfe eines Verdichters 34 auf einen gewünschten Betriebsdruck P_{SG} von z.B. 3 bar verdichtet und nach der Trocknung durch die Trockeneinrichtung 32 über eine Zuströmleitung 15 dem Innenraum 20 zugeführt sowie über eine Abströmleitung 16 aus dem Innenraum 20 abgeführt.

Die Trockeneinrichtung 12 des Umwälzkreises 11 für das Pressgas PG sowie die Trockeneinrichtung 32 des Umwälzkreises 31 für das Schutzgas SG sind hierbei zu einer einzigen Trockeneinrichtung 33 zusammengefasst. Die Trockeneinrichtung 33 kann somit für beide Umwälzkreise 11, 31 gemeinsam genutzt werden.

## Patentansprüche

1. Verfahren zum Betreiben einer elektrochemischen Batterie (1), insbesondere einer Brennstoffzellen-Batterie oder einer Elektrolysezellen-Batterie, mit zumindest einem mit einem ersten Gas (PG) befüllten Druckraum (6) zur Erzeugung eines Anpressdruckes zwischen Bauteilen der elektrochemischen Batterie (1), **dadurch gekennzeichnet , dass** zumindest ein Anteil des in dem Druckraum (6) befindlichen ersten Gases (PG) aus dem Druckraum (6) abgeführt und durch trockenes erstes Gas (PG) ersetzt wird.

2. Verfahren nach Anspruch 1,
**dadurch gekennzeichnet , dass** das in dem Druckraum (6) befindliche erste Gas (PG) über einen Umwälzkreis (11) umgewälzt und dabei in einer Trockeneinrichtung (12) getrocknet wird.

3. Verfahren nach Anspruch 2, bei dem die elektrochemische Batterie (1) in einem Einbauraum (20) angeordnet ist, der mit einem zweiten Gas (SG) befüllt ist,
**dadurch gekennzeichnet , dass** das zweite Gas (SG) ebenfalls über einen Umwälzkreis (31) umgewälzt und dabei mit einer Trockeneinrichtung (32) getrocknet wird, wobei die Trockeneinrichtung (32) des zweiten Gases und die Trockeneinrichtung (12) des ersten Gases zu einer einzigen Trockeneinrichtung (33) zusammengefasst sind.

4. Verfahren nach Anspruch 2, bei dem die elektrochemische Batterie (1) in einem Einbauraum (20) angeordnet ist, der mit einem zweiten Gas (SG) befüllt ist,
**dadurch gekennzeichnet , dass** das zweite Gas (SG) ebenfalls über den Umwälzkreis (11) umgewälzt und dabei mit der Trockeneinrichtung (12) getrocknet wird.

5. Verfahren nach Anspruch 4,
**dadurch gekennzeichnet , dass** der Einbauraum (20) und der Druckraum (6) parallel aus dem Umwälzkreis (11) mit Gas versorgt werden.

6. Verfahren nach Anspruch 4,
**dadurch gekennzeichnet , dass** das in dem Umwälzkreis (11) umgewälzte Gas vor der Zufuhr zu dem Einbauraum (20) und dem zumindest einen Druckraum (6) verdichtet wird.

7. Verfahren nach Anspruch 6,
**dadurch gekennzeichnet , dass** das erste Gas (PG) auf einen für den Druckraum (6) benötigten Druck (PPG) verdichtet wird, wobei das zweite Gas (SG) vor der Zufuhr zu dem Einbauraum (20) auf einen für den Einbauraum (20) benötigten Druck (PSG) entspannt wird.

8. Verfahren nach Anspruch 7,
**dadurch gekennzeichnet , dass** das aus dem Druckraum (6) abgeführte erste Gas (PG) vor der Zusammenführung mit dem aus dem Einbauraum (20) abgeführten zweiten Gas (SG) auf den Druck (PSG) des zweiten Gases (SG) entspannt wird.

9. Verfahren nach einem der vorhergehenden Ansprüche,
**dadurch gekennzeichnet , dass** Stickstoff als erstes Gas (PG) verwendet wird.

10. Elektrochemische Einrichtung mit einer elektrochemische Batterie (1), insbesondere eine Brennstoffzellen-Batterie oder eine Elektrolysezellen-Batterie, mit einem mit einem ersten Gas (PG) befüllbaren Druckraum (6) zur Erzeugung eines Anpressdruckes zwischen Bauteilen der elektrochemischen Batterie (1), **dadurch gekennzeichnet ,**
**dass** der Druckraum (6) mit einer Abströmleitung (14) zur Abfuhr von zumindest einem Anteil des ersten Gases (PG) aus dem Druckraum (6) und mit einer Zuströmleitung (13) zur Zufuhr von trockenem ersten Gas (PG) zu dem Druckraum (6) verbunden ist.

11. Elektrochemische Einrichtung nach Anspruch 10,
**dadurch gekennzeichnet , dass** der Druckraum (6) in einen geschlossenen Umwälzkreis (11) mit einer Trockeneinrichtung (12) für das erste Gas (PG) geschaltet ist.

12. Elektrochemische Einrichtung nach Anspruch 11, bei der die elektrochemische Batterie (1) in einem Einbauraum angeordnet ist, der mit einem zweiten Gas (SG) befüllbar ist,
**dadurch gekennzeichnet , dass** der Einbauraum (20) in einen geschlossenen Umwälzkreises (31) mit einer Trockeneinrichtung (32) für das zweite Gas (SG) geschaltet ist, wobei die Trockeneinrichtung (32) des zweiten Gases und die Trockeneinrichtung (12) des ersten Gases zu einer einzigen Trockeneinrichtung (33) zusammengefasst sind.

13. Elektrochemische Einrichtung nach Anspruch 11, bei der die elektrochemische Batterie (1) in einem Einbauraum angeordnet ist, der mit einem zweiten Gas (SG) befüllbar ist,
**dadurch gekennzeichnet , dass** der Einbauraum (20) an den Umwälzkreis (11) mit der Trockeneinrichtung (12) für das erste Gas (PG) angeschlossen ist.

14. Elektrochemische Einrichtung nach Anspruch 13,
**dadurch gekennzeichnet , dass** der Einbauraum (20) und der Druckraum (6) gasseitig parallel in den Umwälzkreis (11) geschaltet sind.

15. Elektrochemische Einrichtung nach Anspruch 14,
**gekennzeichnet durch** einen Verdichter (17) zur Verdichtung des in dem Umwälzkreis (11) umgewälzten Gases vor der Zufuhr zu dem Einbauraum (20) und dem zumindest einen Druckraum (6).

16. Elektrochemische Einrichtung nach Anspruch 15,
**gekennzeichnet durch** einen zwischen den Verdichter (17) und den Einbauraum (20) geschalteten Druckminderer (18) zur Verminderung des Druckes des ersten Gases (PG) auf einen für den Einbauraum (20) benötigten Druck (PSG).

17. Elektrochemische Einrichtung nach Anspruch 16,
**gekennzeichnet durch** einen Druckminderer (19) zur Verminderung des Druckes (PPG) des aus dem Druckraum (6) abgeführten ersten Gases (PG) auf den Druck (PSG) des aus den Einbauraum (20) abgeführten zweiten Gases (SG).

18. Elektrochemische Einrichtung nach einem der Ansprüche 10 bis 16, **dadurch gekennzeichnet , dass** Stickstoff als erstes Gas (PG) verwendet wird.
